Europäisches Patentamt

European Patent Office

Office européen des brevets

(11) Veröffentlichungsnummer: **0 256 204**
**B1**

(12) **EUROPÄISCHE PATENTSCHRIFT**

(45) Veröffentlichungstag der Patentschrift:
09.05.90

(51) Int. Cl.⁵: **F16K 7/16**

(21) Anmeldenummer: 87102498.0

(22) Anmeldetag: **11.11.83**

(60) Veröffentlichungsnummer der früheren Anmeldung
nach Art. 76 EPÜ: **0109626**

(54) **Membranventil.**

(30) Priorität: **19.11.82 DE 8232418 U**

(43) Veröffentlichungstag der Anmeldung:
**24.02.88 Patentblatt 88/8**

(45) Bekanntmachung des Hinweises auf die Patenterteilung:
**09.05.90 Patentblatt 90/19**

(84) Benannte Vertragsstaaten:
**AT BE CH DE FR GB IT LI LU NL SE**

(56) Entgegenhaltungen:
**DE-A- 2 606 033**

(73) Patentinhaber: **Fletz, Manfred, Müllersbaum 40,
D-5093 Burscheid(DE)**

(72) Erfinder: **Fletz, Manfred, Müllersbaum 40,
D-5093 Burscheid(DE)**

(74) Vertreter: **Paul, Dieter-Alfred, Dipl.-Ing.,
Fichtestrasse 18, D-4040 Neuss 1(DE)**

ACTORUM AG

**Beschreibung**

Die Erfindung betrifft ein Membranventil mit einem Ventilgehäuse, das einen Strömungskanal mit einem schräg zur Strömungseinrichtung angeordneten Ventilsitz mit Kegelsitzfläche aufweist und bei dem zwischen Einspannflächen am Ventilgehäuse eine Membran eingespannt ist, die ein im wesentlichen rundes Ventilverschlußstück trägt, welches um eine quer zur Strömungsrichtung verlaufende Achse verschwenkbar an einer Ventilspindel aufgehängt ist, welche zwischen einer Öffnungs- und einer Schließstellung im spitzen Winkel zur Mittelachse des Ventilsitzkegels axial bewegbar ist.

Derartige Membranventile sind beispielsweise aus der DE-B 2 510 428, der DE-A 2 606 033 und der FR-A 1 045 343 bekannt. Sie weisen in einem unteren Gehäuseteil einen weitgehend geraden Strömungskanal mit einem schräg zur Strömungsrichtung angeordneten Ventilsitz auf. In Schließstellung liegt ein Ventilverschlußstück auf dem Ventilsitz auf, das mit einer Ventilspindel verbunden ist, und zwar einmal gerinfügig beweglich (FR-A 1 045 343) und einmal über ein Gelenk (DE-B 2 510 428, DE-A 2 606 033), um das das Ventilverschlußstück beim Schließen nach Aufsetzen auf dem oberen Teil des Ventilsitzes klappenartig schwenken kann.

Das Ventilverschlußstück ist Teil einer Membran, die zwischen Einspannflächen an dem oberen und unteren Teil des Gehäuses eingespannt ist. Diese Membran ist vom Ventilverschlußstück nach oben gewölbt, so daß zumindest in Schließstellung von der Druckseite her gesehen eine konkave, ringförmige Rinne entsteht. Auf diese Weise ergibt sich die für das Abheben erforderliche Bewegungsfreiheit des Ventilverschlußstückes.

Nachteilig bei diesen Membranventilen ist, daß ihre Druckfestigkeit begrenzt ist, und zwar insbesondere im Bereich des oberen Randes von Ventilverschlußstück und Ventilsitz, wenn beide so ausgebildet sind, wie bei dem Membranventil nach der DE-B 2 510 428 bzw. DE-A 2 606 033. Bei diesem Membranventil ist der Ventilsitz kegelförmig gestaltet. Das im wesentlichen runde Ventilverschlußstück sitzt in der Schließstellung so im Ventilsitz, daß die Mittelachsen von Ventilverschlußstück und vom Kegel des Ventilsitzes praktisch koaxial zueinander verlaufen. Unter Mittelachse des Ventilverschlußstückes ist dabei diejenige Achse zu verstehen, die senkrecht zur Ebene des Ventilverschlußstückes verläuft. Der Kegel des Ventilsitzes wird somit von dem Ventilverschlußstück gerade geschnitten. In Verbindung mit einem Ventilsitzwinkel von etwa 115° entsteht durch diese Geometrie die Gefahr, daß das Ventilverschlußstück beim Schließen durch den Ventilsitz durchrutscht, und zwar zunächst an der oberen Kante des Ventilsitzes. Die Gefahr ist vor allem deshalb gegeben, weil die Ventilspindel im Winkel zur Mittelachse des Ventilverschlußstückes verläuft, und zwar zur Senkrechten hin. Dieser Winkel kann deshalb nur gering sein, keinesfalls so groß, daß die Ventilspindel senkrecht zur Strömungsrichtung verläuft. Letzteres ist jedoch wegen der einfachen Bedienbarkeit erwünscht.

Der Erfindung liegt somit die Aufgabe zugrunde, ein Membranventil der eingangs genannten Art so zu verbessern, daß es bei höheren Drücken als bisher einsetzbar ist.

Die der Erfindung zugrunde liegende Aufgabe wird dadurch gelöst, daß das Ventilverschlußstück zum oberen Rand des Ventilsitzes hin derart versetzt geführt ist, daß das Ventilverschlußstück einerseits umfangsseitig im Bereich seiner Anlage zur Kegelsitzfläche hin derart ausgebildet und andererseits mit der Ventilspindel derart gekoppelt ist, daß das Ventilverschlußstück den Ventilsitzkegel in Schließstellung schief schneidet und die Mittelachse des Ventilverschlußstückes und die des Ventilsitzkegels einen Winkel einschließen.

Geometrisch gesehen schneidet das Ventilverschlußstück den Kegel des Ventilsitzes also nicht – wie bei den bekannten Lösungen – im wesentlichen senkrecht zur Mittelachse (gerader Kegelschnitt), sondern schräg dazu (schiefer Kegelschnitt).

Dies hat zur Folge, daß ein Durchrutschen des oberen Randes des Ventilverschlußstückes nicht mehr möglich ist, und zwar selbst dann nicht, wenn die Ventilspindel in der gewünschten senkrechten Stellung angeordnet ist. Eine sichere Funktion des Ventils ist deshalb bei einfacher Handhabung gegeben.

Der Winkel zwischen den Mittelachsen des Ventilverschlußstückes und des Ventilsitzes in Schließstellung sollte zumindest 5° betragen, wobei der Winkel vorzugsweise zwischen 10 und 20° liegen sollte. Ein Druchrutschen des Ventilverschlußstückes wird ergänzend auch dann erschwert, wenn der Kegelwinkel des Ventilsitzes größer als 120°, vorzugsweise bei 140° liegt.

Erfindungsgemäß sollte die Ventilspindel senkrecht zum Strömungskanal verlaufen, um eine möglichst einfache Betätigung des Membranventils zu erzielen. Schließlich sollte die Gelenkverbindung zwischen Ventilspindel und Ventilverschlußstück aus einem Bolzen und einem diesen maximal 180° einfassenden Haken bestehen, wobei der Haken etwa in Richtung der Ebene des Ventilverschlußstückes offen ist. Diese Ausbildung läßt eine leichte Verschiebung des Ventilverschlußstückes zur Ventilspindel zu, was beim Aufsitzen auf dem Ventilsitz von Vorteil ist.

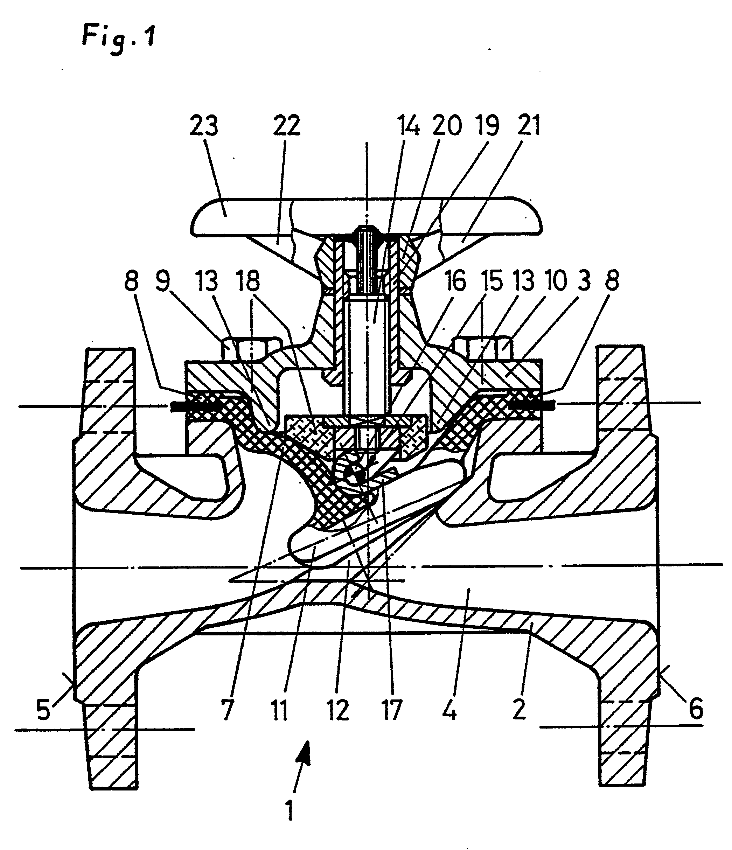

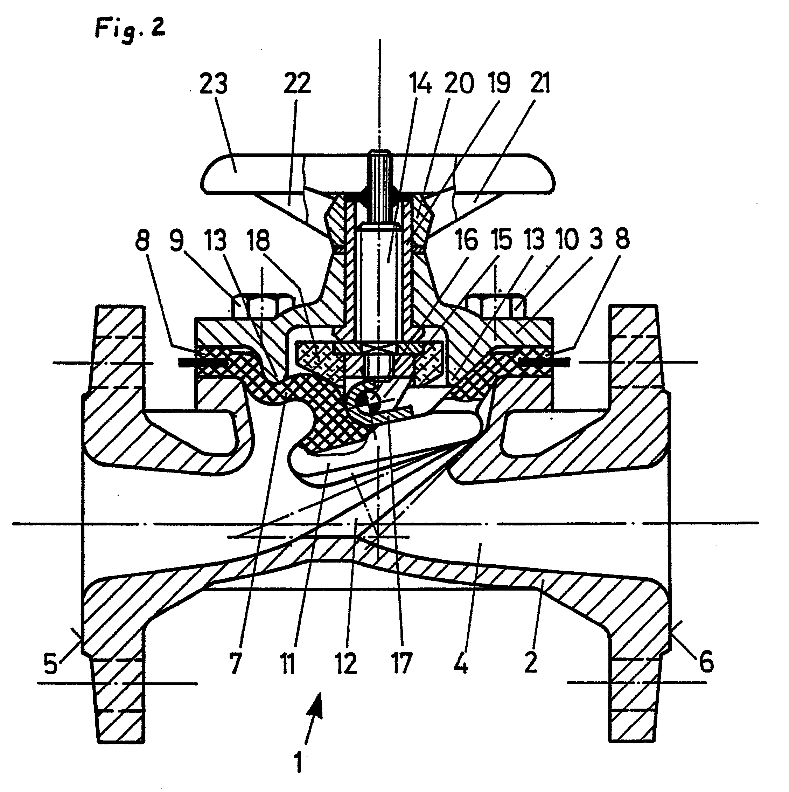

In der Zeichnung ist die Erfindung an Hand eines Ausführungsbeispiels näher veranschaulicht. Es zeigen:

Figur (1) einen Längsschnitt durch ein Membranventil in etwa halb geöffneter Stellung und
Figur (2) einen Längsschnitt durch das Membranventil gemäß Figur (1) in voll geöffneter Stellung.

Das Membranventil (1) besteht aus einem unteren Gehäuseteil (2) und einem oberen Gehäuseteil (3). Das untere Gehäuseteil (2) umschließt einen praktisch gradlinig verlaufenden Strömungskanal (4) und weist an dessen Enden Flansche (5, 6) auf. Es ist zum oberen Gehäuseteil (3) hin offen.

Der offene Abschnitt des unteren Gehäuseteils (2) wird von einer Membran (7) abgeschlossen, die mit ihrem Membranrand (8) zwischen unterem und oberen Gehäuseteil (2, 3) eingespannt wird. Die Einspannkräfte werden über beide Gehäuseteile (2, 3) verbindende Schrauben (9, 10) aufgebracht.

Die Membran (7) weist ein Ventilverschlußstück (11) auf, das mit einem kegelförmigen Ventilsitz (12) korrespondiert, der schräg zur Strömungsrichtung verläuft. Das Ventilverschlußstück (11) ist ein im wesentlichen runder Teller, von dem aus die Membran nach oben verläuft. Von dem in dieser Ansicht linken Teil geht die Membran (7) von der Oberseite des Ventilverschlußstückes (11) nahe der Mitte in einem nach außen gerichteten, von der Druckseite her gesehen konkaven Bogen über, und zwar bis zur Innenwandung des unteren Gehäuseteils (2). Dort biegt sie in einem umgekehrten Bogen nach oben ab, um dann wieder entgegengesetzt nach außen in die Waagerechte zu gehen, wo sie bzw. ihr Membranrand (8) zwischen den beiden Gehäuseteilen (2, 3) eingespannt wird. Im in dieser Ansicht rechten Teil verläuft die Membran (7) vom oberen Rand des Ventilverschlußstückes (11) schräg nach oben und biegt dann außen in den eingespannten Membrandrand (8) um.

Die Membran (7) wird auf ihrer Oberseite, d. h. der druckabgewandten Seite, von einem oberen Gehäuseteil (3) mit einem nach unten gerichteten Ringsteg (13) abgestützt. Sein unterer Rand reicht etwas tiefer als die Einspannfläche am unteren Gehäuseteil (2). Unabhängig von der jeweiligen Stellung des Ventilverschlußstückes (11) sorgt der Ringsteg (13) dafür, daß die Membran (7) von der Einspannung zunächst nach unten biegt. Dies macht insbesondere Figur (2) deutlich, in der sich das Ventilverschlußstück (11) in der Offenstellung befindet. Der Ringsteg (13) verhinert dabei, daß die Flüssigkeit, die durch das Membranventil (1) einfließt, am Membrandrand (8) in der Weise angreifen kann, daß dieser herausgedrückt bzw. herausgezogen wird.

Das Ventilverschlußstück (11) ist an seiner Oberseite mit einer Ventilspindel (14) verbunden, und zwar über ein Schwenkgelenk (15). Letzteres weist einen quer zur Strömungsrichtung waagerecht verlaufenden Bolzen (16) auf, der an dem membranseitigen Ende der Ventilspindel (14) angeordnet ist. Dieser Bolzen (16) wird von einem an dem Ventilverschlußstück (11) befestigten Haken (17) umfaßt, jedoch nur so weit, daß der Bolzen (16) beispielsweise bei der Montage aus dem Haken (17) seitwärts herausrutschen bzw. in diesen hineinrutschen kann. Diese Art Verbindung soll zudem eine geringe seitliche Bewegung des Ventilverschlußstückes (11) etwa beim Aufsetzen auf den Ventilsitz (12) ermöglichen.

Die Ventilspindel (14) ist oberhalb des Schwenkgelenkes (15) von einem Ringkörper (18) umgeben, der eine zusätzliche Abstützung insbesondere des in dieser Ansicht linken Teils der Membran (8) bietet. Die Ventilspindel (14) weist oberhalb dieses Ringkörpers (18) außenseitig ein Schraubgewinde auf, mit dem sie in einer Gewindehülse (19) mit einem innenseitigen Schraubgewinde geführt ist. Die Gewindehülse (19) ist drehbar im oberen Gehäuseteil (3) gelagert und fest mit einem sie im oberen Teil umgebenden Ringteil (20) verbunden. Von diesem Ringteil (20) gehen Speichen (21, 22) radial nach außen zu einem Handrad (23) aus. Durch Drehen des Handrades (23) wird die Gewindehülse (19) mitgenommen, wobei deren Drehbewegung über das Gewinde zwischen ihr und der Ventilspindel (14) in einer Auf- und Abbewegung umgesetzt wird. Diese Lösung hat den Vorteil, daß das Handrad (23) seine Lage während der Verstellung der Ventilspindel (14) nicht ändert, was beispielsweise bei beengten Raumverhältnissen wichtig sein kann.

Die Ventilspindel (14) könnte hier senkrecht zur Strömungsrichtung angeordnet werden, was durch eine besondere Geometrie ermöglicht wird. Diese besteht darin, daß das Ventilverschlußstück (11) in Schließstellung asymmetrisch im Ventilsitz (12) sitzt. Dies bedeutet, daß das Ventilverschlußstück (11) sich dann nicht mit seiner Mittelachse koaxial zu der des Kegels des Ventilsitzes (12) befindet, sondern versetzt zu dieser nach oben hin. Geometrisch liegt hier demnach ein schiefer Kegelschnitt vor, bei dem das Ventilverschlußstück (11) die Schnittfläche und der Ventilsitz (12) den Kegel bilden Entsprechend schließen die Mittelachsen des Ventilverschlußstückes (11) und des Kegels des Ventilsitzes (12) in der Schließstellung einen spitzen Winkel, hier von 15°, ein. In Verbindung mit einem sehr stumpfen Ventilsitzwinkel von etwa 140° wird hierdurch erreicht, daß das Ventilverschlußstück (11) mit seinem oberen - in dieser Ansicht rechten - Teil auf einer breiten Fläche des Ventilsitzes (12) aufliegt. In diesem Bereich besteht somit nicht mehr die Gefahr des Durchrutschens bei höheren Belastungen und damit der Funktionsuntüchtigkeit des Membranventils (1).

## Patentansprüche

1. Membranventil mit einem Ventilgehäuse (2, 3), das einen Strömungskanal (4) mit einem schräg zur Strömungsrichtung angeordneten Ventilsitz (12) mit Kegelsitzfläche aufweist und bei dem zwischen Einspannflächen am Ventilgehäuse (2, 3) eine Membran (7) eingespannt ist, die ein im wesentlichen rundes Ventilverschlußstück (11) trägt, welches um eine quer zur Strömungsrichtung verlaufende Achse verschwenkbar an einer Ventilspindel (14) aufgehängt ist, welche zwischen einer Öffnungs- und einer Schließstellung im spitzen Winkel zur Mittelachse des Ventilsitzkegels axial bewegbar ist, dadurch gekennzeichnet, daß das Ventilverschlußstück (11) einerseits umfangsseitig im Bereich seiner Anlage zur Kegelsitzfläche hin derart ausgebildet und andererseits mit der Ventilspindel (14) derart gekoppelt ist, daß das Ventilverschlußstück (11) zum oberen Rand des Ventilsitzes (12) hin derart versetzt geführt ist, daß das Ventilverschlußstück (11) den Ventilsitzkegel in Schließstellung schief schneidet und die Mittelachse des Ventilverschlußstückes (11) und die des Ventilsitzkegels einen Winkel einschließen.

2. Membranventil nach Anspruch 1, dadurch gekennzeichnet, daß der Winkel zumindest 5° beträgt, vorzugsweise zwischen 10 und 20° liegt.

3. Membranventil nach Anspruch 1 oder 2, dadurch gekennzeichnet, daß der Kegelwinkel des Ventilsitzes größer als 120° ist, vorzugsweise bei 140° liegt.

4. Membranventil nach einem der Ansprüche 1 bis 3,
dadurch gekennzeichnet, daß die Ventilspindel (14) senkrecht zum Strömungskanal (4) verläuft.

## Claims

1. Diaphragm valve having a valve housing (2, 3) which has a throughflow duct (4) with a valve seat (12) situated obliquely with respect to the direction of flow and having a conical seating surface, and wherein there is clamped between holding surfaces on the valve housing (2, 3) a diaphragm (7) which carries a substantially round valve closure element (11) suspended on a valve spindle (14) such as to be pivotable about an axis extending transversely to the direction of flow, which spindle is movable axially between an opening position and a closing position at an acute angle to the central axis of the valve seat cone, characterised in that the valve closure element (11) on the one hand is so constructed peripherally in the region where it abuts against the conical seating surface and on the other hand is so coupled with the valve spindle (14) that the valve closure element (11) is guided offset with respect to the upper edge of the valve seat (12) in such a manner that the valve closure element (11) in the closing position makes an oblique section through the valve seat cone, and the central axis of the valve closure element (11) and that of the valve seat cone form an angle with one another.

2. Diaphragm valve according to claim 1, characterised in that the angle amounts to at least 5°, and is preferably between 10 and 20°.

3. Diaphragm valve according to claim 1 or 2, characterised in that the cone angle of the valve seat is greater than 120°, and is preferably 140°.

4. Diaphragm valve according to one of claims 1 to 3, characterised in that the valve spindle (14) extends perpendicularly with respect to the throughflow duct (4).

## Revendications

1. Soupape à membrane munie d'un carter (2, 3) qui présente un canal d'écoulement (4) avec un siège d'obturation (12) à surface conique, disposé à l'oblique par rapport à la direction de l'écoulement, soupape dans laquelle une membrane (7), enchâssée entre des surfaces d'enserrement ménagées sur le carter (2, 3), porte un obturateur (11) substantiellement rond et suspendu, avec faculté de pivotement autour d'un axe s'étendant transversalement par rapport à la direction de l'écoulement, à une tige (14) de la soupape pouvant être animée de mouvements axiaux, entre une position d'ouverture et une position de fermeture, selon un angle aigu par rapport à l'axe médian du cône du siège d'obturation, caractérisée par le fait que l'obturateur (11) est d'une part réalisé périphériquement, au voisinage de sa zone de contact avec la surface conique du siège et est, d'autre part, accouplé à la tige (14) de la soupape d'une manière telle que l'obturateur (11) soit guidé, en direction du bord supérieur du siège d'obturation (12), avec un décalage tel que ledit obturateur (11) coupe à l'oblique le cône du siège d'obturation, dans la position de fermeture, et que l'axe médian dudit obturateur (11) et celui dudit cône du siège d'obturation décrivent un angle.

2. Soupape à membrane selon la revendication 1, caractérisée par le fait que l'angle mesure au moins 5°, et est de préférence compris entre 10 et 20°.

3. Soupape à membrane selon la revendication 1 ou 2, caractérisée par le fait que l'angle du cône du siège d'obturation est supérieur à 120°, et avoisine de préférence 140°.

4. Soupape à membrane selon l'une des revendications 1 à 3, caractérisée par le fait que la tige (14) de la soupape s'étend perpendiculairement au canal d'écoulement (4).

Fig.1

Fig. 2